# EUROPÄISCHE PATENTANMELDUNG

(11) **EP 0 866 534 A2**
(43) Veröffentlichungstag der Anmeldung: **23.09.1998**
(21) Anmeldenummer: 98102628.9
(22) Anmeldetag: 16.02.1998
(51) Int. Cl.: H02G 3/08

(54) **Verfahren zur Herstellung eines Gehäuses, insbesondere für eine Installationsverteilung, eine Form, mit der das Verfahren durchgeführt werden kann und mit dem Verfahren hergestelltes Gehäuse**

(30) Priorität: 18.03.1997 DE 19711290
(71) Anmelder: ABB PATENT GmbH, 68309 Mannheim (DE)
(72) Erfinder: Bol, Jurriaan Gerrit, 6905 JS Zevenaar (NL)
(74) Vertreter: Rupprecht, Klaus, Dipl.-Ing.

(57) **Zusammenfassung**

Die Erfindung betrifft ein Verfahren zur Herstellung eines Gehäuses, insbesondere für eine Installationsverteilung aus fließfähigem, spritzgießfähigem, erärtendem Material, insbesondere aus Thermoplast, wobei wenigstes eine Gehäusewand wenigstens zwei Verengungen der Wandstärke aufweist, wodurch zwei Rillen gebildet sind, zwischen und entlang denen ein Wandabschnitt der Gehäusewand ausbrechbar ist. Die Zufuhr des fließfähigen Materials (29) zur Gehäusewand (10) sowohl außerhalb als auch innerhalb des ausbrechbaren Wandabschnittes (15) ist so gewählt, daß das Material von beiden Seiten gegen die Verengungen (13, 14) fließt, so daß sich im Verengungsbereich eine Fließnaht ergibt. Die Erfindung befaßt sich weiterhin mit der Form zur Durchführung des Verfahrens und mit dem damit hergestellten Gehäuse.

## Beschreibung

Die Erfindung betrifft ein Verfahren zur Herstellung eines Gehäuses, insbesondere für eine Installationsverteilung gemäß dem Oberbegriff des Anspruches 1, eine Form, mit der das Verfahren durchführbar ist, und ein Gehäuse, das mit dem Verfahren und mit der Form hergestellt ist.

Gehäusewände, die Wandabschnitte aufweisen, die ausbrechbar sind, sind an sich bekannt. Bei einer ersten Ausführung befindet sich der ausbrechbare Wandabschnitt außerhalb der übrigen Gehäusewandung und ist damit über zwei Stege verbunden. Wenn spritzgießfähiges Material zugeführt wird, dann gelangt dieses über die Stege in den ausbrechbaren Wandabschnitt. Hierbei besteht das Problem, daß die eine Gehäusewandoberfläche eine Vertiefung und die andere Gehäusewandoberfläche eine Erhöhung aufweisen, was nachteilig ist, da die Gehäusewandoberflächen unterbrochen sind.

Bei einer anderen Ausführungsform sind in einer Gehäusewandung kreisringförmige Rillen vorgesehen, an denen der innerhalb der Rille befindlichen Wandabschnitt ausgebrochen werden kann. Solche Ausgestaltungen sind nur mittels eines Werkzeuges zu öffnen.

Außerdem besteht das Problem, daß nicht ohne weiteres definiert ist, wie das fließfähige Material in den innerhalb der kreisförmigen Rille befindlichen Wandabschnitt einfließt, so daß die Entlüftung undefiniert sein kann.

Aufgabe der Erfindung ist es, ein Verfahren zur Herstellung eines Gehäuses der eingangs genannten Art, eine Form zur Durchführung des Verfahrens, und ein Gehäuse zu schaffen, bei dem ein Wandabschnitt auf einfache Weise manuell ausgebrochen werden kann, ohne das die Gehäusewandaußenfläche unterbrochen ist.

Diese Aufgabe wird erfindungsgemäß mit einem Verfahren gelöst, das aus den kennzeichnenden Merkmalen des Anspruches 1 hervorgeht.

Die Form, mit der dieses Verfahren durchgeführt werden kann, ergibt sich aus einem der Ansprüche 2 bis 8, und das Gehäuse ist den Ansprüchen 9 bis 15 zu entnehmen.

Man macht sich dabei folgendes zu Nutze:

Wenn das fließfähige Material in das Gehäuse eingepreßt wird, dann fließt das Material drucklos an alle Stellen des Gehäuses und dabei von zwei Seiten gegen jede Verengung. Im Bereich der Verengung kühlt das fließfähige Material geringfügig ab, so daß das fließfähige Material von beiden Seiten gegen die Verengung gedrückt wird, in die Verengung selbst aber nicht einfließen kann. Erst dann, wenn das Gehäuse vollständig mit dem fließfähigen Material ausgefüllt ist, steigt der Druck und das fließfähige Material wird in den Verengungsbereich hineingedrückt, so daß sich die beiden eindringenden Fronten berühren und miteinander eine Verbindung eingehen, die als Fließnaht bezeichnet wird. Der Begriff Fließnaht bedeutet eine Verbindung, bei der eine molekulare Verbindung des erhärteten Materials nicht gegeben ist.

Die Schwachstellen, entlang denen ein Wandabschnitt ausgebrochen werden kann, sind damit durch eine vergleichsweise dünne Wandstärke gebildet und besitzen in dem Bereich der Schwachstelle auch eine andere Materialstruktur.

Wenn die Gehäusewand an einen Gehäuseboden anschließt, dann ist der Gehäusewandabschnitt zwischen den Verengungen vom Gehäuseboden getrennt und mittels wenigstens eines Steges mit dem Gehäuseboden und/oder der Gehäusewand außerhalb der Verengungen verbunden. Der Stegquerschnitt ist so bemessen, daß ausreichend fließfähiges Material in den Gehäusewandabschnitt einfließt.

Bei einer besonders vorteilhaften Ausgestaltung und auch zur Erleichterung des Ausbrechens ist der wenigstens eine Steg zwischen dem Gehäusewandabschnitt und dem Gehäuseboden angeordnet.

Gemäß einer weiteren Ausgeführungsform der Erfindung ist die Verengung vorzugsweise V-förmig, wobei wenigstens ein Schenkel der V-Form in bevorzugter Weise unter einem spitzen Winkel zur Wandoberfläche verläuft.

Es besteht auch die Möglichkeit, daß zwischen den beiden Schenkeln der V-Form ein Abschnitt angeordnet ist, der parallel zur Wandoberfläche verläuft. Die dadurch gebildete Rille besitzt eher die Form eines Trapezes.

Aufgrund der schrägen Seitenwände der durch die Verengung gebildeten Rille ist die Bildung der Fließnaht deutlich unterstützt.

Weitere vorteilhafte Ausgestaltungen der Erfindung sind in den weiteren Unteransprüchen dargestellt.

Anhand der Zeichnung, in der einige Ausführungsbeispiele der Erfindung dargestellt sind, sollen die Erfindung sowie weitere vorteilhafte Ausgestaltungen und Verbesserungen der Erfindung näher erläutert und beschrieben werden.

Es zeigen:
- Fig. 1: eine perspektivische Teilansicht einer Gehäusewandung mit ausbrechbarem Gehäusewandabschnitt,
- Fig. 2: eine Schnittansicht gemäß Schnittlinie II-II der Fig. 1,
- Fig. 3 und 4: eine Schnittansicht eines Werkzeuges zur Herstellung einer Gehäusewand, im Bereich der Schnittlinie III-III der Fig. 1, und
- Fig. 5 und 6: jeweils eine weitere Ausführungsform einer Verengung.

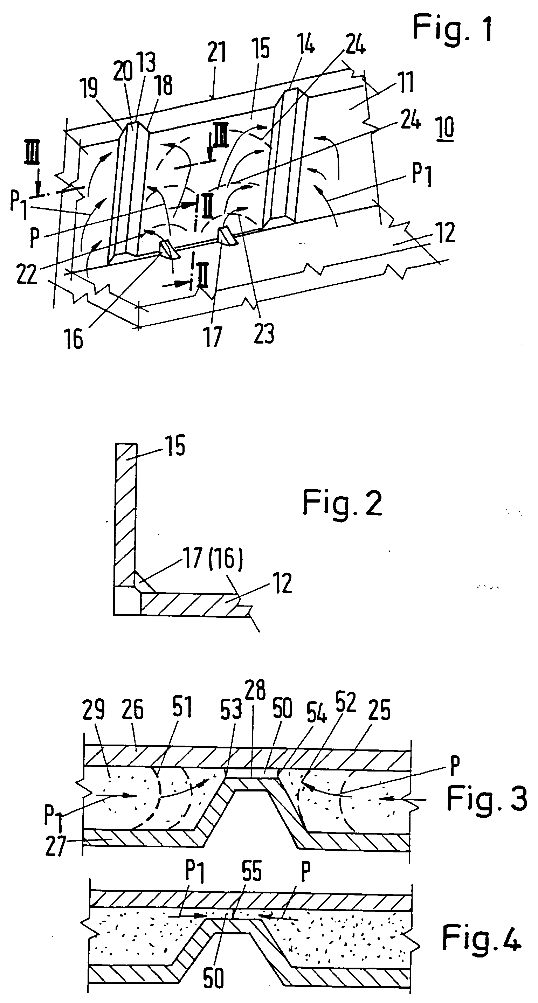

Ein Gehäuse 10, von dem im Fig. 1 lediglich eine Gehäusewand 11 und ein Gehäuseboden 12 dargestellt sind, die senkrecht zueinander verlaufen, dient als Gehäuse für einen Installationsverteiler, beispielsweise in einer elektrischen Hausinstallation.

Die Gehäusewand 11 besitzt zwei Verengungen 13 und 14, auf die weiter unten näher eingegangen werden soll, zwischen denen ein ausbrechbarer Wandabschnitt 15 angeordnet ist. Die Gehäusewand 11 ist außerhalb der beiden Verengungen 13 und 14, also außerhalb des Wandabschnittes 15, mit dem Gehäuseboden einstückig verbunden; der Gehäusewandabschnitt 15 ist mit dem Gehäuseboden 12 über zwei Stege 16 und 17 verbunden. Wie aus der Fig. 1 ersichtlich ist, besitzen beide Verengungen (lediglich an der Verengung 13 dargestellt) eine V-Form, deren beide Schenke 18 und 19 einen spitzen Winkel zwischen sich einschließen, der zum Gehäuseinneren offen ist. Zwischen den beiden SchenkeIn 18 und 19 befindet sich ein Abschnitt 20, der parallel zur Gehäusewandaußenfläche 21 verläuft.

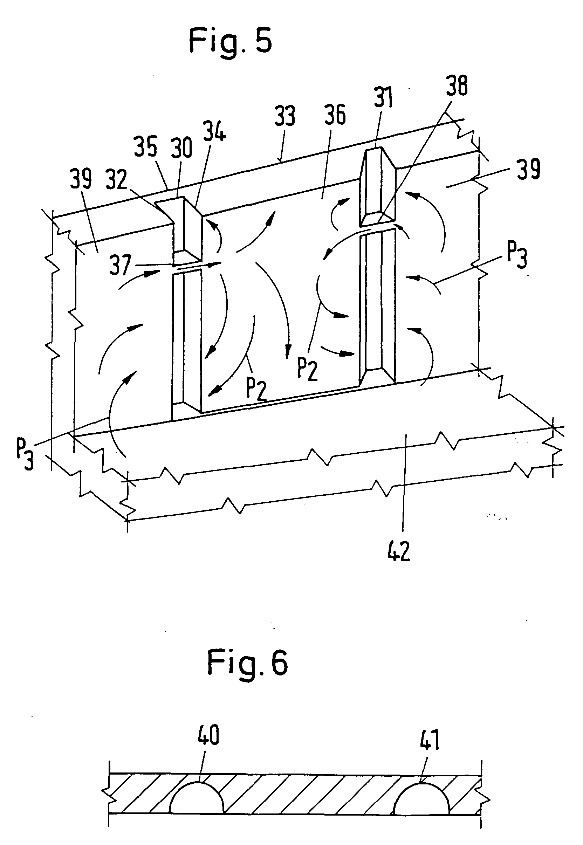

Die Fig. 5 zeigt zwei Verengungen 30 und 31, deren einer Schenkel 32 senkrecht zur Wandaußenfläche 33 verläuft, wogegen der andere Schenkel einen spitzen Winkel mit dem Schenke 32 einnimmt; die Verengungen 30, 31 sind zum Inneren des Gehäuses, also zum Betrachter hin, offen. Auch hier besitzen die beiden Verengungen 30 und 31 einen dem Abschnitt 20 entsprechenden Abschnitt 35, der parallel zur Außenfläche 33 verläuft.

Bei der Ausführung gemäß Fig. 6 sind die Verengungen 40 und 41 kreisbogenförmig; die Wirkungsweise ist die gleiche wie bei den Anordnungen und Ausgestaltungen gemäß den Fig. 1 bis 5.

Unterschiedlich zur Ausführung nach Fig. 1 ist, daß die Zuführungsstege 37 und 38 zu dem ausbrechbaren Gehäusewandabschnitt 36 die Verengungen 30 und 31 überbrücken und eine Materialzufuhr in einer Form von der außerhalb der Verengungen 30 und 31 befindlichen Gehäusewand 39 gemäß Pfeilrichtung P₃ gestatten. Vom Gehäuseboden 42 ist der Gehäusewandabschnitt 36 in gleicher Weise wie der Gehäusewandabschnitt 15 getrennt. Der Materialfluß innerhalb des Wandabschnittes verläuft etwa in Pfeilrichtung P₂.

Bei der Ausführung gemäß Fig. 1 gelangt innerhalb einer Form das fließfähige Material über die Stege 16 und 17 in den Gehäusewandabschnitt 15 gemäß Pfeilrichtung P, wobei sich zwei strichliert dargestellte Fronten 22 und 23 ausbilden, die sich mit weiterer Befüllung zu einer einzigen Front 24 vereinigen. Das fließfähige Material verläuft dann, wie in Fig. 1 dargestellt, gemäß den Pfeilen P gegen die Verengungen 13 und 14. Außerhalb der Verengungen 13 und 14 verläuft das fließfähige Material von dem Gehäuseboden 12 aus gemäß Pfeilrichtung P₁ von der anderen Seite gegen die Verengungen 13 und 14.

Es wird nun Bezug genommen auf die Fig. 3 und 4.

Diese Fig. 3 und 4 zeigen einen Schnitt durch eine Form 25 mit einer Außenwand 26 und einer Innenwand 27, die einen zur Außenwand 27 hin vorspringenden Vorsprung 28 besitzt, der der Form der Verengungen 13 bzw. 14 entspricht. Das fließfähige Material 29 gelangt zunächst gemäß den Pfeilrichtungen P und P₁ gegen einen Zwischenraum 50, der der eigentlichen Verengung 13, 14 entspricht; die Fronten 51 und 52 bleiben am Eintritt zu der Verengung 50 stehen und sind dort mit den Bezugsziffern 53 und 54 bezeichnet (dick ausgezogen), weil bis zur gänzlichen Befüllung der Form, mit der das Gehäuse hergestellt wird, das fließfähige Material drucklos ist. An dieser Stelle bleiben die Fronten 53 und 54 so lange stehen, bis sich die gesamte Form für das Gehäuse 10 gefüllt hat; dann wird der Druck im fließfähigen Material 29 erhöht und gemäß den Pfeilrichtungen P₁ und P fließt das Material innerhalb des Zwischenraumes 50 gegeneinander und berührt sich an der Linie 55, wodurch dort eine Fließnaht gebildet ist, bei der die chemische Vernetzung nach dem Erhärten zwischen den einzelnen Molekülen unterschiedlich zu dem übrigen Bereich ist, da sich die Fronten 53 und 54 zumindest geringfügig abgekühlt haben.

Da der Befüllvorgang in ca. 1 Sekunde abgeschlossen ist, konnten sich die Fronten 53 und 54 noch nicht soweit abkühlen, daß sie vollständig erhärtet sind; gleichwohl ist dort eine Änderung der Materialstruktur im Bereich der Fließnaht zu erkennen.

Nach dem Erkalten ist die Verengung 13 gebildet.

Bei der Ausführung gemäß den Fig. 1 bis 6 ist eine definierte Entlüftung vorgesehen, weil zumindest zur Endkante der Gehäusewand 11 hin eine Entlüftung möglich ist.

Es ist dargestellt, daß sich die Verengungen zum Gehäuseinneren öffnen. Selbstverständlich können sie auch nach außen ofefn sein.

## Patentansprüche

1. Verfahren zur Herstellung eines Gehäuses insbesondere für eine Installationsverteilung, aus fließfähigem, spritzgießfähigem, erhärtendem Material, insbesondere aus Thermoplast, wobei wenigstens eine Gehäusewand wenigstens zwei Verengungen der Wandstärke aufweist, wodurch zwei Rillen gebildet sind, zwischen und entlang denen ein Wandabschnitt der Gehäusewand ausbrechbar ist, dadurch gekennzeichnet, daß die Zufuhr des fließfähigen Materials (29) zur Gehäusewand (10) sowohl außerhalb als auch innerhalb des ausbrechbaren Wandabschnittes (15, 36) so gewählt ist, daß das Material von beiden Seiten gegen die Verengungen (13, 14; 30, 31) fließt, so daß sich im Verengungsbereich eine Fließnaht ergibt.

2. Form mit der das Verfahren nach Anspruch 1 durchführbar ist, dadurch gekennzeichnet, daß sie so ausgebildet ist, daß ein Gehäuse mit einem Gehäuseboden und einer daran anschließenden Gehäusewand herstellbar ist, bei der Gehäusewandabschnitt (15, 36) zwischen den Verengungen (13, 14; 30, 31) vom Gehäuseboden (12, 42) getrennt und mittels wenigstens eines Steges (16, 17; 37, 38) mit dem Gehäuseboden (12, 42) und/oder der Gehäusewand (11, 39) außerhalb der Verengungen (13, 14; 30, 31) verbunden ist, und bei der der Stegquerschnitt so bemessen ist, daß ausreichend fließfähiges Material in den Gehäusewandabschnitt (15, 36) einfließt.

3. Form nach Anspruch 2, dadurch gekennzeichnet, daß der wenigstens eine Steg (16, 17) zwischen dem Gehäusewandabschnitt (15) und dem Gehäuseboden (12) angeordnet ist.

4. Form nach Anspruch 2 oder 3, dadurch gekennzeichnet, daß der wenigstens eine Steg (37, 38) die Verengungen (30, 31) überbrückend die Gehäusewand (39) außerhalb der Verengungen mit dem Gehäusewandabschnitt (36) verbindet.

5. Form nach einem der vorherigen Ansprüche 2 bis 4, dadurch gekennzeichnet, daß die Verengung (13, 14; 30, 31) V-förmig ist.

6. Form nach einem der Ansprüche 2 bis 5, dadurch gekennzeichnet, daß die Verengungen (40, 41) einen kreisbogenförmigen Querschnitt aufweisen.

7. Form nach Anspruch 6, dadurch gekennzeichnet, daß wenigstens ein Schenkel (18, 19; 34) der V-Form unter einem spitzen Winkel zur Wandoberfläche verläuft.

8. Form nach einem der Ansprüche 2 bis 7, dadurch gekennzeichnet, daß zwischen den beiden Schenkeln der V-Form ein Abschnitt (20, 35) angeordnet ist, der parallel zur Wandoberfläche verläuft.

9. Gehäuse mit einem Gehäuseboden und einem daran anschließenden Gehäuse, hergestellt mit dem Verfahren nach Anspruch 1 und in der Form nach einem der Ansprüche 2 bis 8, dadurch gekennzeichnet, daß der Gehäusewandabschnitt (15, 36) zwischen den Verengungen (13, 14; 30, 31) vom Gehäuseboden (12, 42) getrennt und mittels wenigstens eines Steges (16, 17; 37, 38) mit dem Gehäuseboden (12, 42) und/oder der Gehäusewand (11, 39) außerhalb der Verengungen (13, 14; 30, 31) verbunden ist, und daß der Stegquerschnitt so bemessen ist, daß ausreichend fließfähiges Material in dem Gehäusewandabschnitt (15, 36) einfließt.

10. Gehäuse nach Anspruch 9, dadurch gekennzeichnet, daß der wenigstens eine Steg (16, 17) zwischen dem Gehäusewandabschnitt (15) und dem Gehäuseboden (12) angeordnet ist.

11. Gehäuse nach Anspruch 9 oder 10, dadurch gekennzeichnet, daß der wenigstens eine Steg (37, 38) die Verengungen (30, 31) überbrückend die Gehäusewand (39) außerhalb der Verengungen mit dem Gehäusewandabschnitt (36) verbindet.

12. Gehäuse nach einem der Ansprüche 9 bis 11, dadurch gekennzeichnet, daß die Verengung (13, 14; 30, 31) V-förmig ist.

13. Gehäuse nach einem der Ansprüche 9 bis 12, dadurch gekennzeichnet, daß die Verengungen (40, 41) einen kreisbogenförmigen Querschnitt aufweisen.

14. Gehäuse nach Anspruch 13, dadurch gekennzeichnet, daß wenigstens ein Schenkel (18, 19; 34) der V-Form unter einem spitzen Winkel zur Wandoberfläche verläuft.

15. Gehäuse nach einem der vorherigen Ansprüche, dadurch gekennzeichnet, daß zwischen den beiden Schenkeln der V-Form ein Abschnitt (20, 35) angeordnet ist, der parallel zur Wandoberfläche verläuft.
